**Europäisches Patentamt**

**European Patent Office**

**Office européen des brevets**

(19)

(11) Veröffentlichungsnummer: **0 143 823 B1**

(12)

# EUROPÄISCHE PATENTSCHRIFT

(45) Veröffentlichungstag der Patentschrift:
**16.09.87**

(21) Anmeldenummer: **84902041.7**

(22) Anmeldetag: **03.05.84**

(86) Internationale Anmeldenummer:
**PCT/HU 84/00029**

(87) Internationale Veröffentlichungsnummer:
**WO 84/04294 (08.11.84** Gazette 84/26)

(51) Int. Cl.⁴: **C 02 F 1/48, C 02 F 5/00**

(54) **VORRICHTUNG ZUR MAGNETISCHEN BEHANDLUNG VON WASSER ODER ÄHNLICHEN FLÜSSIGKEITEN, ORGANISCHEN ODER ANORGANISCHEN CHEMISCHEN VERBINDUNGEN BZW. GEMISCHEN.**

(30) Priorität: **05.05.83 HU 155983**

(43) Veröffentlichungstag der Anmeidung:
**12.06.85 Patentblatt 85/24**

(45) Bekanntmachung des Hinweises auf die Patenterteilung:
**16.09.87 Patentblatt 87/38**

(84) Benannte Vertragsstaaten:
**AT CH DE FR GB LI NL SE**

(56) Entgegenhaltungen:
**AT - B - 191 810**
**DD - A - 138 717**

(73) Patentinhaber: **LAM, Béla, Jozsef Attila u. 15, H-1161 Budapest (HU)**
Patentinhaber: **MARSO, Sandor, Goldmark K. u. 24, H-1122 Budapset (HU)**

(72) Erfinder: **LAM, Béla, Jozsef Attila u. 15, H-1161 Budapest (HU)**
Erfinder: **MARSO, Sandor, Goldmark K. u. 24, H-1122 Budapset (HU)**

(74) Vertreter: **Kern, Wolfgang, Dipl.-Ing. et al, Patentanwälte Tischer, Kern & Brehm Albert-Rosshaupter-Strasse 73, D-8000 München 70 (DE)**

**Beschreibung**

Die Erfindung betrifft eine Vorrichtung zur Behandlung von Flüssigkeit wie Wasser, organische oder anorganische chemische Verbindungen bzw. Gemische, die die Aufgabe hat, zu verhindern, dass sich ausscheidende Materialien, wie Wasserstein, an der Wand des Behälters oder Kessels an- bzw. absetzen.

Die Erfindung geht aus von der DD-A-138717. Dadurch ist eine Vorrichtung gemäss dem Oberbegriff des Anspruchs 1 bekannt. Bei einer derartigen Vorrichtung ist in dem rohrförmigen Gehäuse koaxial das von der Flüssigkeit durchströmte Rohrstück angeordnet. Das Rohrstück ist aus PVC ausgebildet. Innerhalb des Rohrstücks befinden sich Eisenkerne und dazwischengelagerte scheibenförmige Distanzstücke mit in ihren Umfangsflächen angeordneten Nuten. Ausserhalb des Rohrstücks sind elektromagnetische Spulen angeordnet, die im Zusammenhang mit den Eisenkernen mehrere gegenpolige magnetische Felder innerhalb des Rohrstücks erzeugen.

Nachteilig bei dieser bekannten Vorrichtung ist, dass aufgrund der Konstruktionsgestaltung sie nur mit relativ grossem Aufwand auf- und abbaubar ist und auch die Wartung kompliziert ist. Ferner wird ein zu geringer Wirkungsgrad des Magnetfeldes erreicht.

Um die vorteilhafte Eigenschaft der magnetischen Feldstärke auszunutzen, hat man mehrere Verfahren und Einrichtungen entwickelt, mit deren Hilfe die Entstehung der Ablagerung von Wasserstein und anderer schädlichen Materialien an der Wand von Wasserbehältern, Kesseln, Rohrleitungen, u. dgl. verhindert werden kann.

Aus der HU-A-91278 ist ein solches Verfahren bekannt. Die Materialablagerung an den Metalloberflächen wird hierbei durch Stören der Kristallbildung verhindert, indem die Wände der Kristalle einer magnetischen Wirkung ausgesetzt werden und gleichzeitig elektrischer Strom durch den Behälter geleitet wird.

Eine ähnliche Lösung wird in der AU-PS-191810 beschrieben, bei der, um einen ähnlichen Effekt zu erreichen, ein spezielles Magnetsystem verwendet wird. Eine weitere Station der Entwicklung wird in der HU-A-162455 erwähnt. Danach wird ein dreiphasiges, drehendes magnetisches Feld verwendet.

Die schädlichen Wirkungen der Wassersteinablagerungen traten insbesondere in Dampfkraftwerken auf. Um diese Wirkungen zu eliminieren, sind zahlreiche Lösungsvorschläge gemacht worden. Darunter befindet sich die GB-A-1291600, aus der ein Verfahren bekannt ist, wonach ein magnetisches Feld verwendet wird, um das $Fe_3O_4$ und $Fe_3O_3$ aus dem Speisewasser zu entfernen.

Um die Ablagerung der schädlichen Materialien zu verhindern, wurden ebenfalls zahlreiche Lösungen ausgearbeitet. Dazu gehören Einrichtungen, die mit drehenden Schaufelrädern betriebene Dauermagnete aufweisen. Zu gemeinsamen Merkmalen dieser Einrichtungen gesellen sich gemeinsame Nachteile, die darin bestehen, dass die Erregung mit symmetrischen Erregermagneten erfolgt. Vorrichtungen dieser Art haben sich daher nur in speziellen Fällen bewährt.

Um die Nachteile der bekannten technischen Lösungen zu beseitigen, sind mehrere Massnahmen entwickelt worden. Dazu gehört die Erregung durch asymmetrische Erregermagnete gemäss der HU-A-173113.

Nachteilig hierbei ist, dass die Feldstärke der angewendeten Magnetsysteme beschränkt ist und dass andererseits die Strömungsgeschwindigkeit und die Richtung der Strömung begrenzt sind, so dass der Wirkungsgrad sehr klein ist.

Um den Wirkungsgrad der oben erwähnten Einrichtung zu vergrössern, wurde vorgeschlagen (HU-A-176792), die Magnetschenkel polartig auszubilden. Die Bohrungen für die durchströmende Flüssigkeit werden in den Polen ausgebildet. Hier ist ausserdem eine weitere zentrale Bohrung vorgesehen, deren beide Enden durch je einen Stöpsel aus paramagnetischem Material abgeschlossen sind. Somit kann zwar der Wirkungsgrad erhöht werden, nicht aber die Strömungsgeschwindigkeit. Das Verwendungsgebiet ist dadurch beschränkt.

Ein weiterer Nachteil dieser bekannten Einrichtungen ist darin zu sehen, dass ihr Formwiderstand gross ist. Innerhalb der Einrichtungen bilden sich ungünstige turbulente Strömungen, so dass die Einrichtungen dieser Art nur bei Beibehaltung einer bestimmten Strömungsrichtung betrieben werden. Infolgedessen können diese Einrichtungen in einem Zirkulationssystem nicht verwendet werden. Ausserdem sind ihre Zerlegung und Reinigung entweder überhaupt nicht oder nur schwer möglich, wodurch sich das Durchlassvermögen, das auch von der Verunreinigung der durchströmenden Medien abhängt, vermindert und damit wiederum ihre Lebensdauer und ihr Wirkungsgrad.

Zur Beseitigung dieser Nachteile war eine Vorrichtung entwickelt worden. Diese Vorrichtung besass im wesentlichen drei magnetische Felder, nämlich ein Vormagnetisierfeld, ein Hauptmagnetisierfeld und ein Nachmagnetisierfeld. Die Verwendung mehrerer magnetischer Felder hat den Vorteil, dass mit Hilfe eines zentralen, die magnetischen Kraftlinien sammelnden Rohres die Strömungsverhältnisse innerhalb der Vorrichtung derart verbessert werden konnten, dass der Wirkungsgrad bedeutend vergrössert wurde. Darüberhinaus gewährleistete die Zerlegbarkeit der Vorrichtung eine rasche Reinigung.

Diese Vorrichtung konnte aber den zunehmenden Ansprüchen nicht gerecht werden. Einerseits waren die Herstellungskosten zu hoch, andererseits waren verschiedene Bestandteile nötig, deren Montage ein hohes fachmännisches Können erforderte.

Der Erfindung liegt demgemäss die Aufgabe zugrunde, eine derartige Vorrichtung so weiterzuentwickeln, dass sie leichter auf- und abbaubar und wartungsfreundlicher wird und eine intensive Wirkung des Magnetfeldes auf die Flüssigkeit gewährleistet.

Die Lösung erfolgt durch Ausgestaltung gemäss den Ansprüchen.

Der Erfindung liegt die Erkenntnis zugrunde, dass die Wirksamkeit der Vorrichtung in erster Linie nicht durch die Rohrleitungen, sondern durch die Strömungsgeschwindigkeit der Flüssigkeit, d.h. durch die innerhalb einer bestimmten Zeitperiode durchströmende Menge, bestimmt ist.

Dieser Zweck konnte durch die erfindungsgemässe Vorrichtung erreicht werden. Diese Vorrichtung weist mehrere — vorteilhaft fünf — gleichachsige, voneinander in bestimmten, gleichen Abständen angeordnete, die Durchlassfähigkeit und die magnetische Feldstärke bestimmende, durch Abstandsringe abgeteilte Magnetringe auf. Zwischen den Magnetringen sind — abgestützt durch die Abstandsringe — mit Bohrungen versehene Lenkorgane angeordnet, die das strömende Medium gegen die Magnetringe konstanter, magnetischer Feldstärke lenken. Die Magnetringe, die Abstandsringe und die Lenkorgane sind in eine Einheit zusammengebaut und in einem Gehäuse aus paramagnetischem Material eingeschlossen, das an beiden Enden mit an die Rohrleitung anpassbaren Verschlusskappen versehen ist. Nach einem vorteilhaften Ausführungsbeispiel sind die Abstandsringe, Verdichtungsringe und die Lenkorgane, beispielsweise Lenkbleche, mit in Abhängigkeit von der Strömungsmenge entsprechenden Bohrungen versehene Stauscheiben. Nach diesem Ausführungsbeispiel ist zwischen dem Gehäuse und der Verschlusskappe eine lösbare, zweckdienlich mit Gewinden ausgeführte Verbindung vorgesehen.

Nach einem weiteren zweckmässigen Ausführungsbeispiel sind die Verschlusskappen des Gehäuses zum Anschluss an die Rohrleitung mit Flanschen oder mit Gewinde versehen.

Um einen kontinuierlichen Betrieb zu sichern, wird die Vorrichtung mit Kurzschlussrohr (Umkehrleitung) und mit anderen bekannten Verschlussbestandteilen versehen.

Die Erfindung wird anhand der Zeichnungen, die ein vorteilhaftes Ausführungsbeispiel darstellen, im einzelnen erörtert. Es zeigen:

Fig. 1 eine teilweise längsgeschnittene Seitenansicht der Vorrichtung zur magnetischen Behandlung von Flüssigkeit, und

Fig. 2 eine schematische Draufsicht auf die mit den Lenkorganen versehene Vorrichtung.

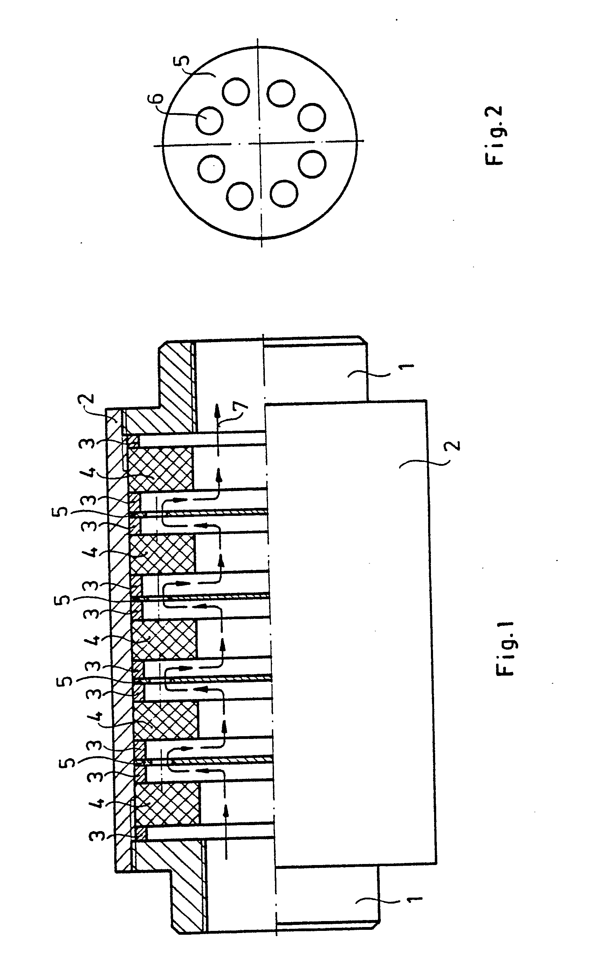

Aus Fig. 1 ist ersichtlich, dass in dem Innenraum des Gehäuses 2 Abstandsringe 3, Magnetringe 4 und dazwischen Lenkorgane 5 angeordnet sind. Die Magnetringe 4 sind in gleichen Abständen eingebaut, wodurch die Feldstärke zwischen den Magnetringen 4 gleich ist. In diesem Raum gleicher Feldstärke sind die Lenkorgane 5 angeordnet, die durch die Abstandsringe 3 abgestützt sind. Die Abstandsringe 3 sind als Dichtungsringe ausgebildet. Die Lenkorgane 5 oder Stauscheiben sind an ihren zwischen den Magnetringen 4 befindlichen Teilen mit Bohrungen 6 versehen, deren Durchmesser von der Strömungsmenge der durchfliessenden Flüssigkeit abhängig ist. Das Gehäuse 2 ist aus einem paramagnetischen Material gefertigt. Es ist an den beiden Enden durch Verschlusskappen 1 abgeschlossen, die mit Hilfe einer Gewindeverbindung an das Gehäuse 2 angeschlossen sind. Die Endungen der Verschlusskappen 1 sind mit einem Flansch bzw. mit einem Gewinde versehen. Vorteilhafterweise erfolgt die Verbindung von Verschlusskappe 1 und Rohrleitung durch ein Holländer.

Die Vorrichtung wird folgendermassen betrieben: Wird die Vorrichtung an einer Rohrleitung verwendet, so strömt die Flüssigkeit entsprechend der Strömungsrichtung durch die Verschlusskappe 1 in den Innenraum ein. Die Strömungsrichtung ist durch den Pfeil 7 angezeigt. Die Flüssigkeit strömt durch den ersten Magnetring 4, der ein Dauermagnet ist, und erreicht das erste in der Strömungsrichtung liegende Lenkorgan 5, durch dessen Bohrung 6 sie dann in die zentrale Bohrung des nächsten Magnetringes gezwungen wird. Dieser Verlauf wiederholt sich bei dem nächsten Magnetring 4 bzw. Lenkorgan 5.

Das Durchlassvermögen bzw. eine zur Strömungsgeschwindigkeit gehörige adäquate Feldstärke werden durch den Abstand zwischen den Magnetringen 4 bzw. durch die Dicke der Abstandsringe 3 bestimmt.

Aus Fig. 2 ist die Ausführung der in der Vorrichtung befindlichen Lenkorgane 5 bzw. Stauscheiben mit den darin ausgebildeten Bohrungen 6 ersichtlich.

Der Vorteil der erfindungsgemässen Vorrichtung ist u.a. darin zu sehen, dass ihre zerlegbaren Bestandteile leicht ausgetauscht werden können. Die Vorrichtung kann an beliebiger Stelle eingesetzt und betrieben werden, z.B. im Zirkulationsbetrieb.

**Patentansprüche**

1. Vorrichtung zur magnetischen Behandlung von Flüssigkeit, mit einem paramagnetischen Gehäuse, darin angeordneten magnetfelderzeugenden Elementen und einem paramagnetischen Rohrstück, das von der Flüssigkeit axial durchströmt wird, wobei in dem Rohrstück Lenkorgane angeordnet sind, die die strömende Flüssigkeit in eine Richtung relativ zu dem Magnetfeld leiten, dadurch gekennzeichnet, dass das durchströmte Rohrstück (2) als das Gehäuse ausgebildet ist; dass die magnetfelderzeugenden Elemente als koaxiale Magnetringe (4) konstanter Feldstärke ausgebildet sind, die innerhalb des Rohrstücks (2) angeordnet sind und durch innerhalb des Rohrstücks (2) angeordnete Abstandsringe (3) voneinander in gleichen axialen Abständen gehalten werden; dass die Lenkorgane (5) durch die Abstandsringe (3) abgestützt zwischen den Magnetringen (4) angeordnet sind und Bohrungen (6) aufweisen, die die strömende Flüssigkeit in Radialrichtung entlang der benachbarten Magnetringe (4) zwingen und dass das Gehäuse an beiden Enden an die Rohrleitung anschliessbare Verschlusskappen (1) besitzt.

2. Vorrichtung nach Anspruch 1, dadurch gekennzeichnet, dass die Magnetringe (4) aus dauermagnetischem Material gefertigt sind.

3. Vorrichtung nach Anspruch 1, dadurch gekennzeichnet, dass die Abstandsringe (3) als Dichtungsringe ausgebildet sind.

4. Vorrichtung nach einem der Ansprüche 1 bis 3, dadurch gekennzeichnet, dass ihre Lenkorgane (5) als Stauscheiben ausgebildet sind, die mit der Strömungsmenge entsprechenden Bohrungen (6) versehen sind.

5. Vorrichtung nach einem der Ansprüche 1 bis 4, dadurch gekennzeichnet, dass zwischen dem Gehäuse (2) und den Verschlusskappen (1) zweckmässigerweise eine mit Gewinde versehene Verbindung vorgesehen ist.

6. Vorrichtung nach einem der Ansprüche 1 bis 5, dadurch gekennzeichnet, dass die Verschlusskappen (1) mit Gewinden zum Anschluss an die Rohrleitungen versehen sind.

7. Vorrichtung nach einem der Ansprüche 1 bis 5, dadurch gekennzeichnet, dass die Verschlusskappen (1) mit Rohrleitungen versehen sind.

8. Vorrichtung nach einem der Ansprüche 1 bis 7, dadurch gekennzeichnet, dass sie mit einer Umkehrleitung und sonstigen bekannten Ausrüstungen für eine kontinuierliche Betriebsart versehen ist.

## Claims

1. Apparatus for the magnetically treatment of a liquid, comprising a paramagnetic casing including elements for establishing a magnetic field as well as a paramagnetic tubular piece which is axially flowed through by the liquid, said tubular piece being provided with guiding elements directing the flowing liquid into a direction relatively to the magnetic field, characterized in that the flowed through tubular piece (2) is configured to become said casing, that the elements establishing the magnetic field are coaxial magnetic rings (4) of a constant field strength, which rings are positioned within said tubular piece (2) and are kept in equal axial distances from one another by distance rings (3) within said tubular piece (2), that said guiding elements (5) are positioned between said magnetic rings (4) supported by said distance rings (3) and being provided with bores (6) forcing the flowing liquid in a radial direction passing the adjacent magnetic rings (4) and that said casing is provided at both ends with fastening caps (1) connectable to the pipe.

2. Apparatus according to claim 1, characterized in that the magnetic rings (4) are manufactured of permanent magnetic material.

3. Apparatus according to claim 1, characterized in that the distance rings (3) form sealing rings.

4. Apparatus according to one of the claims 1 through 3, characterized in that its guiding elements (5) form impact discs which are provided with bores (6) corresponding to the flowing mass.

5. Apparatus according to one of the claims 1 through 4, characterized in that between the casing (2) and the fastening caps (1) a connection provided with a thread is advantageously configured.

6. Apparatus according to one of the claims 1 through 5, characterized in that the fastening caps (1) are provided with threads for the connection to the pipes.

7. Apparatus according to one of the claims 1 through 5, characterized in that the fastening caps (1) are provided with tube flanges.

8. Apparatus according to one of the claims 1 through 7, characterized in that it is provided with a return pipe and other known equipments for a continuous operation.

## Revendications

1. Dispositif pour le traitement magnétique de liquides, avec un boîtier paramagnétique, dans lequel sont disposés des éléments générant un champ magnétique, et un élément tubulaire paramagnétique au travers duquel le liquide passe axialement, des organes de guidage étant disposés dans l'élément tubulaire qui dirigent le liquide traversant dans une direction relativement au champ magnétique, caractérisé en ce que l'élément tubulaire (2) traversé est constitué comme formant le boîtier; que les éléments générant un champ magnétique ont la forme de bagues magnétiques (4) coaxiales d'une intensité du champ constante qui sont disposées dans l'élément tubulaire (2) et sont maintenues entre elles à des distances axiales égales par des bagues d'écartement (3) disposées à l'intérieur de l'élément tubulaire (2); que les organes de guidage (5) sont disposés entre les bagues magnétiques (4), supportés par les bagues d'écartement (3) et présentent des trous (6) qui forcent le liquide traversant dans le sens radial le long des bagues magnétiques (4) voisines et que le boîtier possède aux deux extrémités des clapets (1) raccordables à la tuyauterie.

2. Dispositif d'après revendication 1, caractérisé en ce que les bagues magnétiques (4) sont faites dans un matériau présentant une aimentation permanente.

3. Dispositif d'après revendication 1, caractérisé en ce que les bagues d'écartement (3) sont formées comme étant des bagues d'étanchéité.

4. Dispositif d'après l'une des revendications 1 à 3, caractérisé en ce que ses organes de guidage (5) sont formés comme des écrans réducteurs de pression pourvus de trous (6) correspondant à la quantité d'écoulement.

5. Dispositif d'après l'une des revendications 1 à 4, caractérisé en ce qu'un raccord fileté est prévu de façon appropriée entre le boîtier (2) et les clapets (1).

6. Dispositif d'après l'une des revendications 1 à 5, caractérisé en ce que les clapets (1) sont pourvus de filets pour le raccordement à la tuyauterie.

7. Dispositif d'après l'une des revendications 1 à 5, caractérisé en ce que les clapets (1) sont pourvus de brides de tuyaux.

8. Dispositif d'après l'une des revendications 1 à 7, caractérisé en ce qu'il est pourvu d'une conduite d'inversement et d'autres équipements connus pour un type de service continu.

Fig.1

Fig.2